# EUROPEAN PATENT SPECIFICATION

(11) **EP 4 457 120 B1**
(45) Date of publication and mention of the grant of the patent: **25.03.2026**
(21) Application number: 22854367.4
(22) Date of filing: 22.12.2022
(51) Int. Cl.: B60R 1/12

(54) **BLIND SPOT WARNING METHOD AND SYSTEM FOR A MOTOR VEHICLE HAVING A TRAILER COUPLED THERETO**
TOTWINKELWARNVERFAHREN UND -SYSTEM FÜR EIN KRAFTFAHRZEUG MIT DARAN GEKOPPELTEM ANHÄNGER
PROCÉDÉ ET SYSTÈME D'AVERTISSEMENT D'ANGLE MORT POUR UN VÉHICULE À MOTEUR AUQUEL EST COUPLÉE UNE REMORQUE

(30) Priority: 31.12.2021 US 202163266286 P; 10.02.2022 US 202217650568
(43) Date of publication of application: 06.11.2024
(73) Proprietor: AUMOVIO Autonomous Mobility US, LLC, Auburn Hills, Michigan 48326 (US)
(72) Inventor: ROBINSON, Andrew Boyd, Auburn Hills, Michigan 48326 (US); VANCIL, Max, Auburn Hills, Michigan 48326 (US); OSTROVSKIY, Oleg, Auburn Hills, Michigan 48326 (US)
(74) Representative: Aumovio Corporation
(86) International application number: PCT/US2022/082211
(87) International publication number: WO 2023/129860

(56) References cited:
- WO-A1-2016/015938
- WO-A1-2017/138866
- WO-A1-2018/091675
- US-A1- 2020 372 802
- US-B2- 11 017 672

## Description

### TECHNICAL FIELD

This disclosure relates to a blind spot warning method and system for a tow vehicle having a connected trailer, and particularly relates to a system which informs a user of a tow vehicle of a size of a corresponding blind spot zone based upon whether or not a trailer is connected to the tow vehicle.

### BACKGROUND

Some vehicles today include autonomous and/or semi-autonomous functionality for vehicles for use in connecting to a trailer and pulling the connected trailer. One such function is a blind spot warning system in which sensors disposed on the tow vehicle sense another vehicle is disposed in proximity to the vehicle. Oftentimes a trailer is connected to the vehicle, in which case the blind spot warning system of the tow vehicle extends the blind spot zone to correspond not only to the tow vehicle but also the trailer. However, the tow vehicle driver may be unsure as to which blind spot zone, the zone corresponding to the tow vehicle or corresponding to the tow vehicle and the trailer, is used by the blind spot warning system. The document WO2016/015938A1 discloses blind spot warning according to the closest prior art.

### SUMMARY

Example embodiments of the present disclosure are directed to a blind spot warning method for a tow vehicle, including determining, at data processing hardware, whether a trailer is connected to the tow vehicle. The data processing hardware determines, based on the determination whether the trailer is connected to the tow vehicle, whether a blind spot zone corresponds to the tow vehicle or to the tow vehicle and the trailer. At least one instruction is sent from the data processing hardware to a user interface of the tow vehicle. The at least one instruction is an instruction for displaying an image for viewing by a driver of the tow vehicle. The displayed image indicates the determination whether the blind spot zone corresponds to the tow vehicle or to the tow vehicle and the trailer, and indicates a presence or absence of another vehicle in the blind spot zone.

**In** an implementation, displaying the image includes displaying the image on at least one mirror of the tow vehicle and/or on another display of the tow vehicle.

**In** an implementation, the displayed image includes a representation of the tow vehicle, a representation of the trailer, and at least one of a representation of a first other vehicle disposed adjacent the representation of the tow vehicle or a representation of a second other vehicle disposed adjacent the representation of the trailer.

The blind spot warning method may further include detecting the another vehicle in the blind spot zone. If the trailer is determined to be connected to the tow vehicle, the method may further include sending at least one second instruction from the data processing hardware to the user interface to change in the displayed image the representation of the tow vehicle, the representation of the trailer and the representation of the second other vehicle. The sending may be responsive to the detection of the another vehicle in the blind spot zone.

The method may further include, if the trailer is determined not to be connected to the tow vehicle, sending at least one third instruction from the data processing hardware to the user interface to change in the displayed image the representation of the tow vehicle and the representation of the first other vehicle, with the sending being responsive to the detection of the another vehicle in the blind spot zone.

**In** an implementation, the at least one second instruction to change the representation of the tow vehicle, the representation of the trailer, and the representation of the second other vehicle in the displayed image is to change the representation of the tow vehicle, the representation of the trailer, and the representation of the second other vehicle from a first color to a second color. In addition, the at least one third instruction to change the representation of the tow vehicle and the trailer and the representation of the first other vehicle in the displayed image is to change the representation of the tow vehicle and the representation of the first other vehicle from the first color to the second color without changing a color of the representation of the trailer. In one aspect, the second color is red.

In an implementation, the method includes receiving, at the data processing hardware, information associated with one or more dimensions of the trailer, and determining, at the data processing hardware, a length of the blind spot zone based at least partly upon the information. In this case, if the trailer is determined to be connected to the tow vehicle, detecting the another vehicle in the blind spot zone is based upon the length of the blind spot zone. The information associated with the one or more dimensions of the trailer is provided from memory accessible by the data processing hardware or via the user interface of the tow vehicle.

In an implementation, the determination whether the blind spot zone corresponds to the tow vehicle or to the tow vehicle and the trailer is constantly provided in the displayed image during operation of the tow vehicle.

Another example embodiment is directed to a blind spot warning software product stored in non-transitory memory and having instructions which, when executed by data processing hardware, causes the data processing hardware to perform a method described above, including determining whether a trailer is connected to the tow vehicle and determining, based on the determination whether the trailer is connected to the tow vehicle, whether a blind spot zone corresponds to the tow vehicle or to the tow vehicle and the trailer. At least one instruction is sent to a user interface of the tow vehicle, for displaying an image for viewing by a driver of the tow vehicle. The displayed image indicates the determination whether the blind spot zone corresponds to the tow vehicle or to the tow vehicle and the trailer, and indicates a presence or absence of another vehicle in the blind spot zone.

**In** another example embodiment, a blind spot warning system for a tow vehicle is disclosed, including a controller having data processing hardware and memory. The controller is configured to perform a method as described above and including actions to determine whether a trailer is connected to the tow vehicle. Based on the determination whether the trailer is connected to the tow vehicle, the controller determines whether a blind spot zone corresponds to the tow vehicle or to the tow vehicle and the trailer. In addition, the controller is configured to send, to a user interface of the tow vehicle, at least one instruction for displaying an image for viewing by a driver of the tow vehicle. The displayed image indicates the determination whether the blind spot zone corresponds to the tow vehicle or to the tow vehicle and the trailer, and indicates a presence or absence of another vehicle disposed in the blind spot zone.

### BRIEF DESCRIPTION OF THE DRAWINGS

The present disclosure will become more fully understood from the detailed description and the accompanying drawings, wherein:
FIG. 1 is a schematic diagram of a tow vehicle hitched to a trailer, according to an example embodiment.
FIG. 2 is a diagram of the tow vehicle and trailer of FIG. 1 and includes blind spot zones corresponding to the tow vehicle and corresponding to the trailer.

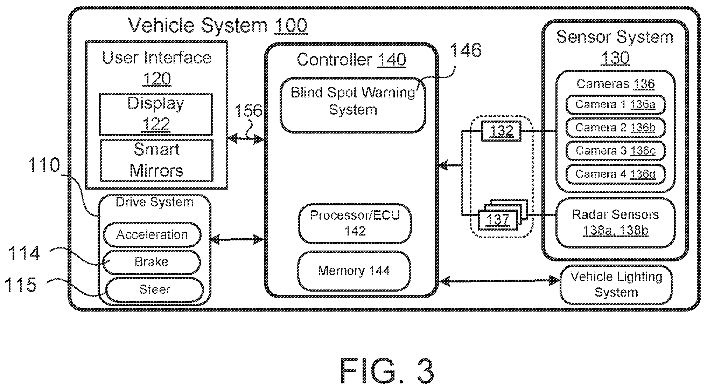

FIG. 3 is a block diagram of a vehicle system of the tow vehicle of FIG. 1 having a blind spot warning system, according to an example embodiment.
FIGS. 4-6 are elevational views of a side mirror of the tow vehicle of FIG. 1 having various blind spot images displayed thereon, according to an example embodiment.
FIG. 7 is a flow chart illustrating an operation of the blind spot warning system of FIG. 2 according to an example embodiment.

### DESCRIPTION

The following description is merely exemplary in nature and is in no way intended to limit the disclosure, its application, or uses. For purposes of clarity, the same reference numbers will be used in the drawings to identify similar elements.

In general terms, example embodiments are directed to a blind spot warning system and method for a tow vehicle which indicates to the tow vehicle driver the presence or absence of another vehicle in an adjacent blind spot area, and indicates a blind spot zone as corresponding to the tow vehicle or to the tow vehicle and a connected trailer.

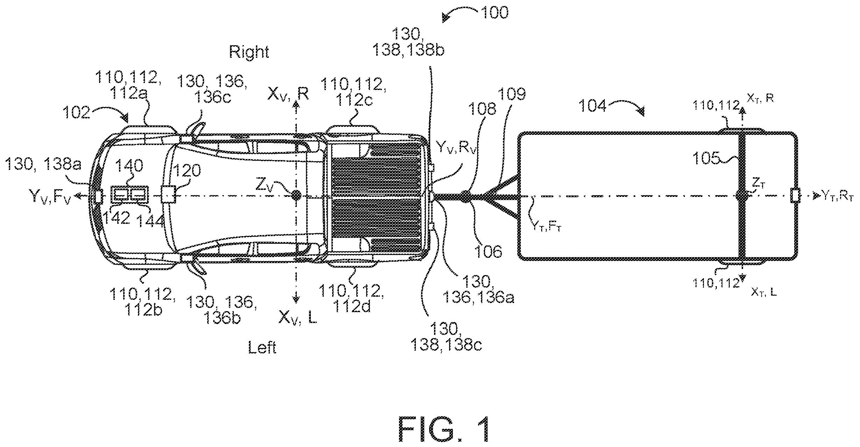

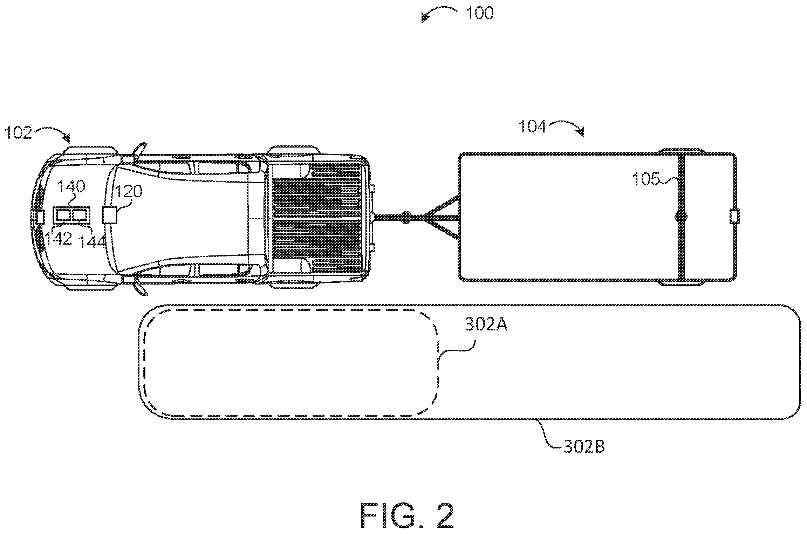

Referring to Figs. 1 and 2, in some implementations, a vehicle driving system 100 includes a tow vehicle 102 hitched to a trailer 104 by way of a hitch 106. The tow vehicle 102 may be but is not limited to a car, a crossover, a truck, a van, a sports-utility-vehicle (SUV), and a recreational vehicle (RV). The trailer 104 may be any type of trailer including, for example, a gooseneck trailer or a fifth wheel trailer. The tow vehicle 102 includes a drive system 110 associated with the tow vehicle 102 that maneuvers the tow vehicle 102 and thus the vehicle driving system 100 across a road or other surface based on drive maneuvers or commands having x, y, and z components, for example. As shown, the drive system 110 includes a front right wheel 112, 112a, a front left wheel 112, 112b, a rear right wheel 112, 112c, and a rear left wheel 112, 112d. In addition, the drive system 110 may include wheels (not shown) associated with the trailer 104. The drive system 110 may include other wheel configurations as well. The drive system 110 includes other components (not shown) that are in communication with and connected to the wheels 112 that allow the tow vehicle 102 to move, thus moving the trailer 104 as well. The drive system 110 may also include a brake system 114 that includes brakes associated with each wheel 112, 112a-d, where each brake 116 is associated with a wheel 112a-112d and is configured to slow down or stop the wheel 112a-112d from rotating. In some examples, the brake system 114 is connected to one or more brakes supported by the trailer 104. The drive system 110 may also include an acceleration system 113 that is configured to adjust a speed of the tow vehicle 102 and thus the vehicle driving system 100, and a steering system 115 that is configured to adjust a direction of the tow vehicle 102 and thus the vehicle driving system 100. The vehicle driving system 100 may include other systems as well.

The tow vehicle 102 may move across the road surface by various combinations of movements relative to three mutually perpendicular axes defined by the tow vehicle 102: a transverse axis Xv, a fore-aft axis Yv, and a central vertical axis Zv. The transverse axis Xv, extends between a right side R and a left side L of the tow vehicle 102. A forward drive direction along the fore-aft axis Yv is designated as Fv, also referred to as a forward motion. In addition, an aft or rearward drive direction along the fore-aft direction Yv is designated as Rv, also referred to as rearward motion. In some examples, the tow vehicle 102 includes a suspension system (not shown), which when adjusted causes the tow vehicle 102 to tilt about the Xv axis and or the Yv axis, or move along the central vertical axis Zv. As the tow vehicle 102 moves, the trailer 104 follows along a path of the tow vehicle 102. Therefore, when the tow vehicle 102 makes a turn as it moves in the forward direction F_{V}, the trailer 104 follows along.

Moreover, the trailer 104 follows the tow vehicle 102 across the road surface by various combinations of movements relative to three mutually perpendicular axes defined by the trailer 104: a trailer transverse (pitch) axis X_{T}, a trailer fore-aft (roll) axis Y_{T}, and a trailer central vertical (yaw) axis Z_{T}. The trailer transverse axis X_{T}, extends between a right side R and a left side L of the trailer 104, for example, along the trailer axle 105. A forward drive direction along the trailer fore-aft axis Y_{T} is designated as F_{T}, also referred to as a forward motion. In addition, a trailer aft or rearward drive direction along the fore-aft direction Y_{T} is designated as R_{T}, also referred to as rearward motion. Therefore, movement of the vehicle driving system 100 includes movement of the tow vehicle 102 along its transverse axis Xv, fore-aft axis Yv, and central vertical axis Zv, and movement of the trailer 104 along its trailer transverse axis X_{T}, trailer fore-aft axis Y_{T}, and trailer central vertical axis Z_{T}. Therefore, when the tow vehicle 102 makes a turn as it moves in the forward direction Fv, the trailer 104 follows along. While turning, the tow vehicle 102 and the trailer 104 form a trailer angle being an angle between the vehicle fore-aft axis Yv and the trailer fore-aft axis Y_{T}.

The tow vehicle 102 may include a user interface 120. The user interface 120 is configured to display information to the driver of the tow vehicle. In some examples, the user interface 120 is configured to receive one or more user commands from the driver via one or more input mechanisms and/or displays one or more notifications to the driver. In some examples, the one or more input mechanisms of the user interface 120 includes a touch screen display 122, a heads-up display, and various tow vehicle mirrors such as smart side mirrors and/or a rear view mirror that are configured for displaying information to the tow vehicle driver. In other examples, the one or more input mechanisms of the user interface 120 includes a rotary knob or a mouse to make a selection or otherwise provide information.

In the illustrated embodiment(s), the tow vehicle 102 includes a sensor system 130 to provide sensor system data 132 that may be used to determine one or more measurements associated with an environment of the tow vehicle 102, the trailer 104, and/or objects surrounding the tow vehicle 102. In some examples, the sensor system 130 provides for reliable and robust autonomous or semi-autonomous driving. The sensor system 130 may include different types of sensors that may be used separately or with one another to create a perception of the tow vehicle's environment or a portion thereof that is used by the vehicle driving system 100 to determine measurements and/or identify object(s) in its environment and/or in some examples autonomously drive and make intelligent decisions based on objects and obstacles detected using the sensor system 130. The tow vehicle 102 may support the sensor system 130 while in other examples, the sensor system 130 is supported by both the tow vehicle 102 and the trailer 104. The sensor system 130 may include sensor(s) positioned on the rear vehicle bumper 108 and/or on the front vehicle bumper.

In some implementations, the sensor system 130 includes one or more imaging devices 136, 136a-136c, such as cameras. The one or more cameras 136, 136a-136c capture images of an environment of the tow vehicle 102. The cameras 136 may be used in providing a surround view of the tow vehicle 102.

The sensor system 130 further includes one or more radar sensors 138a-138c. Radar sensors 138a-138c are mounted on the tow vehicle 102. In the illustrated embodiment, radar sensor 138a is mounted along a front end portion of the tow vehicle 102, and radar sensors 138b and 138c are disposed along a rear end portion of the tow vehicle 102, such as along the rear bumper thereof.

The sensor system 130 may include other sensors, such as sonar sensors, LIDAR (Light Detection and Ranging) sensors which can entail optical remote sensing that measures properties of scattered light to find range and/or other information of a distant target), LADAR (Laser Detection and Ranging) sensors, ultrasonic sensors, etc. The other sensors may be positioned on the tow vehicle 102, such as on a rear portion of the tow vehicle.

The sensor system 130 provides camera data 132 that includes camera image(s) captured by the camera 136a-136c, and radar data 137 captured by the radar sensors 138a-138c. Therefore, the sensor system 130 is especially useful for receiving information of the environment or portion of the environment of the vehicle 102 and for increasing safety in the vehicle driving system 100 which may operate by the driver, or under semi-autonomous or autonomous control.

The drive system 110, the user interface 120, and the sensor system 130 are in communication with a vehicle controller 140 that includes a computing device (or data processing hardware) 142 (e.g., central processing unit having one or more computing processors) in communication with non-transitory memory or hardware memory 144 (e.g., a hard disk, flash memory or other nonvolatile memory, random-access memory or other volatile memory) capable of storing software program code instructions executable on the computing processor(s)). In some examples, the non-transitory memory 144 stores program code instructions which when executed on the computing device 142 cause the vehicle controller 140 to provide signals or commands which control or facilitate the control of the tow vehicle 102 in a forward or reverse maneuver, either autonomously or semi-autonomously. Such instructions form at least part of a blind spot warning system 146 which are executed by the vehicle controller 140. As shown, the vehicle controller 140 is supported by the tow vehicle 102; however, the vehicle controller 140 may be separate from the tow vehicle 102 and in communication with the tow vehicle 102 via a network (not shown).

A blind spot zone is defined by the controller 140 for use by the blind spot warning system 146 such that a warning is provided to the tow vehicle driver in the event another vehicle is detected in the blind spot zone. The blind spot zone, depicted in FIG. 2 as a rectangle in two dimensions, is positioned adjacent the tow vehicle 102 and connected trailer 104. Specifically, a first blind spot zone 302A is depicted as extending in the forward direction to the location of the B-pillar of the tow vehicle 102 and in the rearward direction to a location beyond the rear of the tow vehicle 102. A second, extended blind spot zone 302B is depicted as extending in the forward direction to the location of the B-pillar of the tow vehicle 102 and in the rearward direction to a location beyond the rear of the trailer 104. A width of the blind spot zone may correspond to the width of a lane of a roadway. According to an example embodiment, the first blind spot zone 302A corresponds to the blind spot zone utilized by the blind spot warning system 146 when the tow vehicle 102 is used without the trailer 104 connected thereto, and the second blind spot zone 302B corresponds to the blind spot zone utilized by the blind spot warning system 146 when the tow vehicle 102 is operated with the trailer 104 connected thereto. The length of each blind spot zone 302A, 302B may be determined as described below using any number of techniques.

In an example embodiment, the blind spot warning system 146 determines whether the trailer 104 is connected to the tow vehicle 102. This determination may be automatically determined in any of a number of ways. For example, the blind spot warning system 146 may determine whether or not the trailer 104 is connected to the tow vehicle 102 based on sensor data from rearward-facing sensor136a and/or sensor 138b, 138c using an object detection module or algorithm. In addition or in the alternative, the blind spot warning system 146 may determine whether or not the trailer 104 is connected to the tow vehicle 102 based on detection of an electrical connection of the lighting system of the trailer 104 to the electrical/lighting system of the tow vehicle 104 for powering and controlling the trailer's lighting system. The determination of whether or not the trailer 104 is connected to the tow vehicle 102 may also be made by the blind spot warning system 146 receiving, via the user interface 120, an indication from a user of the tow vehicle 102 that the trailer 104 is connected to the tow vehicle 102.

The blind spot warning system 146 may determine the size of the blind spot zone 302 for use in performing blind spot warning functions based in part upon the determination as to whether or not the trailer 104 is connected to the tow vehicle 102. In the event the trailer 104 is connected to the tow vehicle 102, the blind spot warning system 146 may determine the length of the blind spot zone 302 for use in performing blind spot warning functions based on the length of the trailer 104. The length of the trailer 104 may be provided by a user of the tow vehicle 102 via the user interface 120 or accessed from the memory 144.

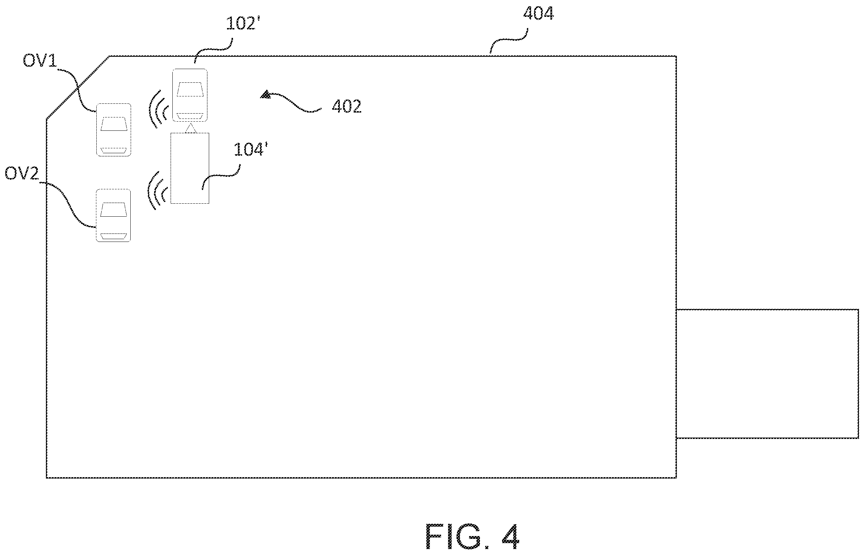

The blind spot warning system 146 further informs the driver of the tow vehicle 102 the blind spot zone 302A or 302B which is utilized by the blind spot warning system 146. According to an example embodiment, the blind spot warning system 146 displays an image to the driver of the tow vehicle 102 which informs the driver about the general length of the blind spot zone 302A or 302B so as to eliminate driver confusion as to the effectiveness of the operation of the blind spot warning system 146. FIGS. 4-6 shows an image 402 that is displayed within the view of the tow vehicle driver. In the drawings, the image 402 is displayed on a side mirror 404 of the tow vehicle, and in particular the left side mirror but it is understood the image may be displayed on the rear view mirror, a heads-up display and/or the touch screen display 122 of the tow vehicle 102. As shown in the drawings, the image 402 includes a representation 102' of the tow vehicle 102 and a representation 104' of the trailer 104 in a top plan view, along with a representation OV1 of a first other vehicle adjacent the representation 102' of the tow vehicle 102, and a second other vehicle OV2 adjacent the representation 104' of the trailer 104. FIG. 4 illustrates the displayed image 402 when the blind spot warning system 146 is activated but there are no vehicles detected in the blind spot zones of the tow vehicle 102 and/or the trailer 104. This image 402 may be displayed with or without the trailer 104 being connected to the tow vehicle 102.

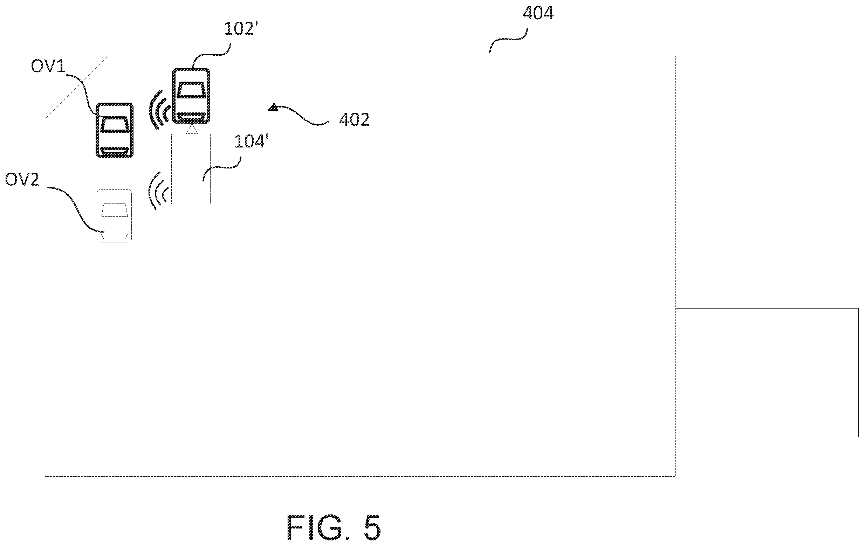

The blind spot warning system 146 further informs the tow vehicle driver whether the blind spot zone corresponds to the tow vehicle 102 (i.e., zone 302A, when no trailer is connected thereto) or corresponds to the tow vehicle 102 and the trailer 104 (i.e., zone 302B, when the trailer is connected to the tow vehicle). In other words, the system informs the driver of the length or size of the blind spot zone 302A or 302B when a vehicle(s) is detected in the blind spot zone. FIG. 5 illustrates the display 402 when no trailer is connected to the tow vehicle 102 and another vehicle is detected in the blind spot zone 302A associated with the tow vehicle 102. In this drawing, the display of the image 402 changes such that the representation 102' of the tow vehicle 102 and the representation OV1 of the other vehicle adjacent the tow vehicle representation 102' change in appearance while the representation 104' of the trailer 104 and the other vehicle representation OV2 adjacent the trailer representation do not change. In one implementation, the color of the representation 102' of the tow vehicle 102 and the representation OV1 of the other vehicle changes. For example, the representations of the displayed image 402 may be a yellow when no vehicle is in the blind spot zone, and the representation 102' of the tow vehicle 102 and the other vehicle representation OV1 change to red responsive to the detection of another vehicle in the corresponding blind spot zone. FIG. 5 illustrates the representation 102' of the tow vehicle 102 and the representation OV1 of the other vehicle having changed in color (in this case, the widths of the lines depicting the representations are made larger to emulate a color change). By only changing the representation 102' of the tow vehicle 102 and the other vehicle representation OV1 not only indicates to the tow vehicle driver that another vehicle is in the blind spot zone but also that the blind spot zone 302A corresponding to the tow vehicle 102 is used by the blind spot warning system 146 due to the absence of the connected trailer 104. As a result, the tow vehicle driver is aware of the blind spot zone used by the blind spot warning system 146 so as to avoid confusion.

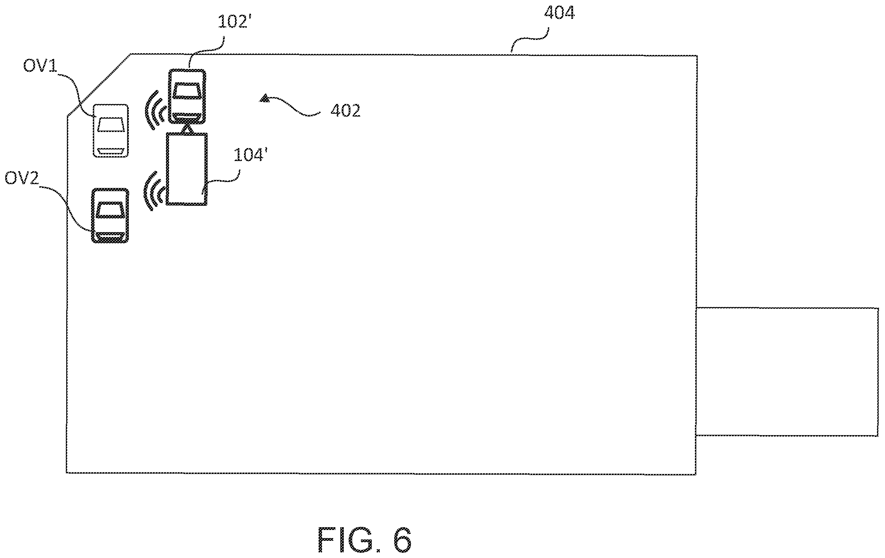

FIG. 6 illustrates the display 402 when the trailer 104 is connected to the tow vehicle 102 and another vehicle is detected in the blind spot zone 302B associated with the tow vehicle 102 and the trailer 104. In this drawing, the display of the image 402 changes such that the representation 102' of the tow vehicle 102, the representation 104' of the trailer 104 and the representation OV2 of the other vehicle adjacent the trailer representation 104' change in appearance. In one implementation, the color of these representations in the image 402 changes. For example, the representations of the displayed image 402 may be yellow when no vehicle is in the blind spot zone 302B and the representations of the tow vehicle 102, the trailer 104 and the other vehicle change to red responsive to the detection of another vehicle(s) in the corresponding blind spot zone 302B. FIG. 6 illustrates the representations of the tow vehicle 102, the trailer 104 and the other vehicle(s) having changed in color, relative to the representations in the displayed image 402 of FIG. 4. By changing the representation 102' of the tow vehicle 102, the representation 104' of the trailer 104 and the representation OV2 of the other vehicle not only indicates to the tow vehicle driver that another vehicle is in the blind spot zone but that the blind spot zone 302B corresponding to the tow vehicle 102 and the trailer 104 is used by the blind spot warning system 146 due to the presence of the connected trailer 104. As a result, the tow vehicle driver is aware of the blind spot zone used by the blind spot warning system 146.

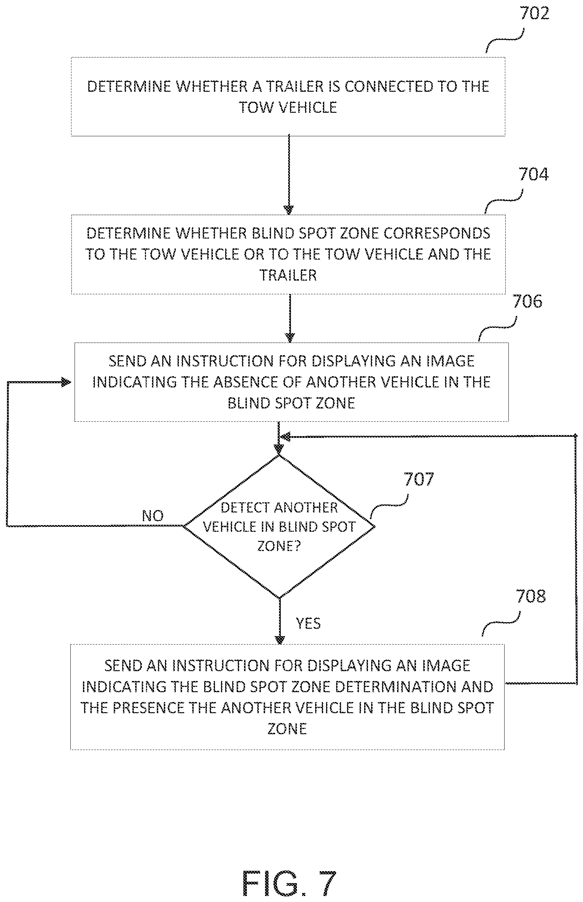

FIG. 7 illustrates a flowchart of an operation of the blind spot warning system 146 according to an example embodiment. Following activation of the blind spot warning system 146, the controller 140, when executing instructions of the algorithm of the system, determines at 702 whether or not a trailer, such as the trailer 104, is connected or hitched to the tow vehicle 102. This determination may be automatically performed, such as by detecting the presence or absence of the trailer 104 in the sensor data provided by rear-facing sensors 136 and/or 138 of the tow vehicle 102, or by detecting the presence or absence of an electrical connection of the lighting system of the trailer 104 to the electrical/lighting system of the tow vehicle 102. Alternatively, the determination may be performed by a user of the tow vehicle 102 sending via the interface 120 a confirmation that the trailer 104 is connected to the tow vehicle 102.

Upon determining whether or not the trailer 104 is connected to the tow vehicle 102, the controller 140 determines at 704 whether the blind spot zone corresponds to the tow vehicle 102 or to both the tow vehicle 102 and the trailer 104. This determination is based on whether the trailer 104 is determined to be connected to the tow vehicle 102 in block 702. The trailer 104 being connected to the tow vehicle 102 results in the blind spot zone corresponding to both the tow vehicle 102 and the trailer 104, and the tow vehicle 102 being unconnected to the trailer 104 results in the blind spot zone corresponding to the tow vehicle 102.

The controller 140 may also determine the size or length of the blind spot zone for use in detecting another vehicle in the zone. The blind spot zone size or length may be determined based on various dimensions of the tow vehicle 102 and the connected trailer 104, which may be provided by the tow vehicle user via the user interface 120, accessed from the memory 144, and/or provided by analysis of the sensor data from the rear-facing sensors 136a, 138b, and/or 138c. The determined size or length of the blind spot zone may then be used to detect another vehicle disposed in the zone and warn the driver accordingly.

During operation, when the blind spot warning system 146 detects no vehicle in the blind spot zone, at 706 the controller 140 sends an instruction(s) to display the image 402 in a first color, such as yellow. In one implementation, the controller 140 sends the instruction(s) to the user interface 130 for displaying the image 402 on at least one mirror and/or other display of the tow vehicle 102.

When the system detects at 707 another vehicle in the blind spot zone, the controller sends at 708 at least one instruction for displaying the image 402 indicating the presence of the other vehicle in the zone and also indicating that the zone determined in block 704. In the event no trailer is connected to the tow vehicle 102, the displayed image 402 indicates the first blind spot zone 302A is used by changing the color of the representation 102' of the tow vehicle 102 and the representation OV of the other vehicle detected, as shown in FIG. 5. In the event the trailer 104 is connected to the tow vehicle 102, the displayed image 402 indicates that the second blind spot zone 302B is used by changing the color of the representation 102' of the tow vehicle 102, the representation 104' of the trailer 104, and the representation OV of the other vehicle(s), as shown in FIG. 6. Control then returns to block 707. Responsive to the detection of the other vehicle no longer being in the blind spot zone, the controller 140 at 706 sends an instruction for displaying the image 402 which indicates the absence of the other vehicle in the zone by returning the representations in the displayed image 402 to the original yellow color.

In another example embodiment, a static notification is constantly provided to the vehicle driver as to the size of the blind spot zone 302A or 302B. In one implementation, additional text may be included in the image 402 indicating that a trailer is connected to the tow vehicle 102. In another implementation, the representation 102' of the tow vehicle 102 is constantly displayed in red when no trailer is connected to the tow vehicle, and the representation 102' of the tow vehicle 102 and the representation 104' of the trailer 104 are constantly displayed in red when a trailer 104 is connected to the tow vehicle. Then, when another vehicle is detected in the corresponding blind spot zone 302A or 302B, only the representation OV1 or OV2, respectively, changes color to red to alert the vehicle driver of the presence of another vehicle in the corresponding blind spot zone. In another implementation, the representation 104' of the trailer 104 and the representation OV2 of the other vehicle are separated from the representations 102' and OV1 of the tow vehicle 102 and the other vehicle, respectively, wherein the representations 104' and OV2 or a text representing extended blind spot zone 302B is illuminated while other vehicle detections in the blind spot zone 302B are active.

Moreover, the software instructions which are executed by the controller 140 to perform blind spot warning functions may be saved in the memory 144 or other computer readable medium. The disclosed memory device 44, may can include any one or combination of volatile memory elements (e.g., random access memory (RAM, such as DRAM, SRAM, SDRAM, VRAM, etc.)) and/or nonvolatile memory elements (e.g., ROM, hard drive, tape, CD-ROM, etc.). The software in the memory may include one or more separate programs, each of which includes an ordered listing of executable instructions for implementing logical functions. The controller 40 can be configured to execute software stored within the memory, to communicate data to and from the memory, and to generally control operations of the computing device pursuant to the software. Software in memory, in whole or in part, is read by the processor, perhaps buffered within the processor, and then executed.

## Claims

1. A blind spot warning method for a tow vehicle (102), the method comprising:
determining, at data processing hardware (142), whether a trailer (104) is connected to the tow vehicle (102);
determining, at the data processing hardware based on the determination whether the trailer (104) is connected to the tow vehicle (102), whether a blind spot zone (302A, 302B) corresponds to the tow vehicle (102) or to the tow vehicle (102) and the trailer (104); and
sending, from the data processing hardware (142) to a user interface (120) of the tow vehicle (102), at least one instruction for displaying an image (402) for viewing by a driver of the tow vehicle (102), the displayed image indicating the determination whether the blind spot zone (302A, 302B) corresponds to the tow vehicle (102) or to the tow vehicle (102) and the trailer (104), and indicating a presence or absence of another vehicle (OV) in the blind spot zone (302A, 302B).

2. The blind spot warning method of claim 1, wherein displaying the image (402) comprises displaying the image (402) on at least one mirror of the tow vehicle (102).

3. The blind spot warning method of claim 1, wherein displaying the image (402) comprises displaying the image (402) on a display of the tow vehicle (102).

4. The blind spot warning method of claim 1, wherein the image (402) comprises a representation of the tow vehicle (102), a representation of the trailer (104), and at least one of a representation (OV1) of a first other vehicle disposed adjacent the representation (102') of the tow vehicle (102) or a representation (OV2) of a second other vehicle disposed adjacent the representation (104')of the trailer (104).

5. The blind spot warning method of claim 4, further comprising:
detecting the another vehicle (OV) in the blind spot zone (302A, 302B);
if the trailer (104) is determined to be connected to the tow vehicle (102), sending at least one second instruction from the data processing hardware (142) to the user interface (120) to change in the displayed image (402) the representation (102') of the tow vehicle (102), the representation (104') of the trailer (104) and the representation (OV2) of the second other vehicle, the sending being responsive to the detection of the another vehicle in the blind spot zone (302A, 302B).

6. The blind spot warning method of claim 5, further comprising:
if the trailer (104) is determined not to be connected to the tow vehicle (102), sending at least one third instruction from the data processing hardware (142) to the user interface (120) to change in the displayed image (402) the representation (102') of the tow vehicle (102) and the representation (OV1) of the first other vehicle, the sending being responsive to the detection of the another vehicle in the blind spot zone (302A, 302B).

7. The blind spot warning method of claim 6, wherein
the at least one second instruction to change the representation (102') of the tow vehicle (102), the representation (104') of the trailer (104), and the representation (OV2) of the second other vehicle in the displayed image (402) is to change the representation (102') of the tow vehicle (102), the representation (104') of the trailer (104), and the representation (OV2) of the second other vehicle from a first color to a second color, and
the at least one third instruction to change the representation (102', 104') of the tow vehicle (102) and the trailer (104) and the representation (OV1) of the first other vehicle in the displayed image (402) is to change the representation (102') of the tow vehicle (102) and the representation (OV1) of the first other vehicle from the first color to the second color without changing a color of the representation (104') of the trailer (104).

8. The blind spot warning method of claim 7, wherein the second color is red.

9. The blind spot warning method of claim 5, further comprising receiving, at the data processing hardware (142), information associated with one or more dimensions of the trailer (104), and determining, at the data processing hardware (142), a length of the blind spot zone (302A, 302B) based at least partly upon the information, wherein if the trailer (104) is determined to be connected to the tow vehicle (102), detecting the another vehicle in the blind spot zone (302A, 302B) is based upon the length of the blind spot zone (302A, 302B).

10. The blind spot warning method of claim 1, wherein the determination whether the blind spot zone (302A, 302B) corresponds to the tow vehicle (102) or to the tow vehicle (102) and the trailer (104) is constantly provided in the displayed image (402) during operation of the tow vehicle (102).

11. A blind spot warning software product stored in non-transitory memory and having instructions which, when executed by data processing hardware (142) causes the data processing hardware (142) to perform a method comprising:
determining whether a trailer (104) is connected to a tow vehicle (102);
determining, based on the determination whether the trailer (104) is connected to the tow vehicle (102), whether a blind spot zone (302A, 302B) corresponds to the tow vehicle (102) or to the tow vehicle (102) and the trailer (104); and
sending, to a user interface (120) of the tow vehicle (102), at least one instruction for displaying an image (402) for viewing by a driver of the tow vehicle (102), the displayed image indicating the determination whether the blind spot zone (302A, 302B) corresponds to the tow vehicle (102) or to the tow vehicle (102) and the trailer (104), and indicating a presence or absence of another vehicle (OV) in the blind spot zone (302A, 302B).

12. The blind spot warning software product of claim 11, wherein displaying the image (402) comprises displaying the image (402) on at least one mirror of the tow vehicle (102).

13. The blind spot warning software product of claim 12, wherein the at least one mirror comprises a side mirror (404) of the tow vehicle (102).

14. The blind spot warning software product of claim 11, wherein the image (402) comprises a representation of the tow vehicle (102), a representation of the trailer (104), and at least one of a representation (OV1) of a first other vehicle disposed adjacent the representation of the tow vehicle (102) or a representation (OV2) of second other vehicle disposed adjacent the representation (104') of the trailer (104).

15. The blind spot warning software product of claim 14, wherein the method further comprises:
detecting the another vehicle in the blind spot zone (302A, 302B);
if the trailer (104) is determined to be connected to the tow vehicle (102), sending at least one second instruction from the data processing hardware (142) to the user interface (120) to change the representation (102') of the tow vehicle (102), the representation (104') of the trailer (104) and the representation (OV2) of the second other vehicle in the displayed image (402), the sending being responsive to the detection of the another vehicle in the blind spot zone (302A, 302B).

16. The blind spot warning software product of claim 15, wherein the method further comprises:
if the trailer (104) is determined not to be connected to the tow vehicle (102), sending at least one third instruction from the data processing hardware (142) to the user interface (120) to change the representation (102') of the tow vehicle (102) and the representation (OV1) of the first vehicle in the displayed image (402), the sending being responsive to the detection of the another vehicle in the blind spot zone

17. The blind spot warning software product of claim 16, wherein
the at least one second instruction to change the representation (102') of the tow vehicle (102), the representation (104') of the trailer (104) and the representation (OV2) of the second other vehicle in the displayed image (402) is to change the representation (102') of the tow vehicle (102), the representation (104') of the trailer (104) and the representation (OV2) of the second other vehicle from a first color to a second color, and
the at least one third instruction to change the representation (102') of the tow vehicle (102) and the representation (104') of the first other vehicle in the displayed image (402) is to change the representation (102') of the tow vehicle (102) and the representation (OV1) of the first other vehicle from the first color to the second color.

18. The blind spot warning software product of claim 11, wherein the method further comprises receiving data associated with one or more dimensions of the trailer (104), determining the size of the blind spot zone (302A. 302B) is based at least partly upon the received data, and the data associated with the one or more dimensions of the trailer (104) is provided from memory accessible by the data processing hardware (142) or via a user interface (120) of the tow vehicle (102).

19. A blind spot warning system for a tow vehicle (102), comprising:
a controller comprising data processing hardware (142) and memory, the controller configured to
determine whether a trailer (104) is connected to the tow vehicle (102);
determine, based on the determination whether the trailer (104) is connected to the tow vehicle (102), whether a blind spot zone (302A, 302B) corresponds to the tow vehicle (102) or to the tow vehicle (102) and the trailer (104); and
send, to a user interface of the tow vehicle (102), at least one instruction for displaying an image (402) for viewing by a driver of the tow vehicle (102), the displayed image (402) indicating the determination whether the blind spot zone corresponds to the tow vehicle (102) or to the tow vehicle (102) and the trailer (104), and indicating a presence or absence of another vehicle (OV) disposed in the blind spot zone (302A, 302B).

20. The blind spot warning system of claim 19, wherein
the image (402) comprises a representation (102') of the tow vehicle (102), a representation (104') of the trailer (104), and at least one of a representation (OV1) of a first other vehicle disposed adjacent the representation (102') of the tow vehicle (102) or a representation (OV2) of a second other vehicle disposed adjacent the representation (104') of the trailer (104), and
the controller is further configured to:
detect the another vehicle (OV) in the blind spot zone (302A, 302B);
if the trailer (104) is determined to be connected to the tow vehicle (102), sending at least one second instruction from the data processing hardware (142) to the user interface (120) to change the representation (102') of the tow vehicle (102), the representation (104') of the trailer (104) and the representation (OV2) of the second other vehicle in the displayed image (402), the sending being responsive to the detection of the another vehicle (OV) in the blind spot zone (302A, 302B); and
if the trailer (104) is determined not to be connected to the tow vehicle (102), sending at least one third instruction from the data processing hardware (142) to the user interface (120) to change the representation (102') of the tow vehicle (102) and the representation (OV1) of the first vehicle in the displayed image (402), the sending being responsive to the detection of the another vehicle (OV) in the blind spot zone (302A, 302).

## Patentansprüche

1. Totwinkelwarnverfahren für ein Zugfahrzeug (102), wobei das Verfahren Folgendes umfasst:
Bestimmen, ob ein Anhänger (104) mit dem Zugfahrzeug (102) verbunden ist, an einer Datenverarbeitungshardware (142);
Bestimmen, ob eine Totwinkelzone (302A, 302B) dem Zugfahrzeug (102) oder dem Zugfahrzeug (102) und dem Anhänger (104) entspricht, an der Datenverarbeitungshardware auf Grundlage des Bestimmens, ob der Anhänger (104) mit dem Zugfahrzeug (102) verbunden ist; und
Senden mindestens einer Anweisung zum Anzeigen eines Bildes (402) zum Betrachten durch einen Fahrer des Zugfahrzeugs (102) von der Datenverarbeitungshardware (142) an eine Benutzerschnittstelle (120) des Zugfahrzeugs (102), wobei das angezeigte Bild das Bestimmen angibt, ob die Totwinkelzone (302A, 302B) dem Zugfahrzeug (102) oder dem Zugfahrzeug (102) und dem Anhänger (104) entspricht, und ein Vorhandensein oder
Nichtvorhandensein eines anderen Fahrzeugs (OV) in der Totwinkelzone (302A, 302B) angibt.

2. Totwinkelwarnverfahren nach Anspruch 1, wobei das Anzeigen des Bildes (402) Anzeigen des Bildes (402) auf mindestens einem Spiegel des Zugfahrzeugs (102) umfasst.

3. Totwinkelwarnverfahren nach Anspruch 1, wobei das Anzeigen des Bildes (402) Anzeigen des Bildes (402) auf einer Anzeige des Zugfahrzeugs (102) umfasst.

4. Totwinkelwarnverfahren nach Anspruch 1, wobei das Bild (402) eine Darstellung des Zugfahrzeugs (102), eine Darstellung des Anhängers (104) und mindestens eine von einer Darstellung (OV1) eines ersten anderen Fahrzeugs, das benachbart zu der Darstellung (102') des Zugfahrzeugs (102) angeordnet ist, oder einer Darstellung (OV2) eines zweiten anderen Fahrzeugs, das benachbart zu der Darstellung (104') des Anhängers (104) angeordnet ist, umfasst.

5. Totwinkelwarnverfahren nach Anspruch 4, ferner umfassend:
Erkennen des anderen Fahrzeugs (OV) in der Totwinkelzone (302A, 302B); Senden mindestens einer zweiten Anweisung von der
Datenverarbeitungshardware (142) an die Benutzerschnittstelle (120), wenn bestimmt wird, dass der Anhänger (104) mit dem Zugfahrzeug (102) verbunden ist, um die Darstellung (102') des Zugfahrzeugs (102), die Darstellung (104') des Anhängers (104) und die Darstellung (OV2) des zweiten anderen Fahrzeugs in dem angezeigten Bild (402) zu ändern, wobei das Senden als Reaktion auf das Erkennen des anderen Fahrzeugs in der Totwinkelzone (302A, 302B) erfolgt.

6. Totwinkelwarnverfahren nach Anspruch 5, ferner umfassend:
Senden mindestens einer dritten Anweisung von der Datenverarbeitungshardware (142) an die Benutzerschnittstelle (120), wenn bestimmt wird, dass der Anhänger (104) nicht mit dem Zugfahrzeug (102) verbunden ist, um die Darstellung (102') des Zugfahrzeugs (102) und die Darstellung (OV1) des ersten anderen Fahrzeugs in dem angezeigten Bild (402) zu ändern, wobei das Senden als Reaktion auf das Erkennen des anderen Fahrzeugs in der Totwinkelzone (302A, 302B) erfolgt.

7. Totwinkelwarnverfahren nach Anspruch 6, wobei
die mindestens eine zweite Anweisung zum Ändern der Darstellung (102') des Zugfahrzeugs (102), der Darstellung (104') des Anhängers (104) und der Darstellung (OV2) des zweiten anderen Fahrzeugs in dem angezeigten Bild (402) dazu dient, die Darstellung (102') des Zugfahrzeugs (102), die Darstellung (104') des Anhängers (104) und die Darstellung (OV2) des zweiten anderen Fahrzeugs von einer ersten Farbe in eine zweite Farbe zu ändern, und
die mindestens eine dritte Anweisung zum Ändern der Darstellung (102', 104') des Zugfahrzeugs (102) und des Anhängers (104) und der Darstellung (OV1) des ersten anderen Fahrzeugs in dem angezeigten Bild (402) dazu dient, die Darstellung (102') des Zugfahrzeugs (102) und die Darstellung (OV1) des ersten anderen Fahrzeugs von der ersten Farbe in die zweite Farbe zu ändern, ohne eine Farbe der Darstellung (104') des Anhängers (104) zu ändern.

8. Totwinkelwarnverfahren nach Anspruch 7, wobei die zweite Farbe Rot ist.

9. Totwinkelwarnverfahren nach Anspruch 5, ferner umfassend Empfangen von Informationen, die einer oder mehreren Abmessungen des Anhängers (104) zugeordnet sind, an der Datenverarbeitungshardware (142) und Bestimmen einer Länge der Totwinkelzone (302A, 302B) an der Datenverarbeitungshardware (142) mindestens teilweise auf Grundlage der Informationen, wobei das Erkennen des anderen Fahrzeugs in der Totwinkelzone (302A, 302B) auf Grundlage der Länge der Totwinkelzone (302A, 302B) erfolgt, wenn bestimmt wird, dass der Anhänger (104) mit dem Zugfahrzeug (102) verbunden ist.

10. Totwinkelwarnverfahren nach Anspruch 1, wobei das Bestimmen, ob die Totwinkelzone (302A, 302B) dem Zugfahrzeug (102) oder dem Zugfahrzeug (102) und dem Anhänger (104) entspricht, während des Betriebs des Zugfahrzeugs (102) ständig in dem angezeigten Bild (402) bereitgestellt wird.

11. Totwinkelwarn-Softwareprodukt, das in einem nicht transitorischen Speicher gespeichert ist und Anweisungen aufweist, die bei Ausführung durch eine Datenverarbeitungshardware (142) die Datenverarbeitungshardware (142) dazu veranlassen, ein Verfahren durchzuführen, das Folgendes umfasst:
Bestimmen, ob ein Anhänger (104) mit einem Zugfahrzeug (102) verbunden ist; Bestimmen, ob eine Totwinkelzone (302A, 302B) dem Zugfahrzeug (102) oder dem Zugfahrzeug (102) und dem Anhänger (104) entspricht, auf Grundlage des Bestimmens, ob der Anhänger (104) mit dem Zugfahrzeug (102) verbunden ist; und
Senden mindestens einer Anweisung zum Anzeigen eines Bildes (402) zum Betrachten durch einen Fahrer des Zugfahrzeugs (102) an eine Benutzerschnittstelle (120) des Zugfahrzeugs (102), wobei das angezeigte Bild das Bestimmen angibt, ob die Totwinkelzone (302A, 302B) dem Zugfahrzeug (102) oder dem Zugfahrzeug (102) und dem Anhänger (104) entspricht, und ein Vorhandensein oder Nichtvorhandensein eines anderen Fahrzeugs (OV) in der Totwinkelzone (302A, 302B) angibt.

12. Totwinkelwarn-Softwareprodukt nach Anspruch 11, wobei das Anzeigen des Bildes (402) Anzeigen des Bildes (402) auf mindestens einem Spiegel des Zugfahrzeugs (102) umfasst.

13. Totwinkelwarn-Softwareprodukt nach Anspruch 12, wobei der mindestens eine Spiegel einen Seitenspiegel (404) des Zugfahrzeugs (102) umfasst.

14. Totwinkelwarn-Softwareprodukt nach Anspruch 11, wobei das Bild (402) eine Darstellung des Zugfahrzeugs (102), eine Darstellung des Anhängers (104) und mindestens eine von einer Darstellung (OV1) eines ersten anderen Fahrzeugs, das benachbart zu der Darstellung des Zugfahrzeugs (102) angeordnet ist, oder einer Darstellung (OV2) eines zweiten anderen Fahrzeugs, das benachbart zu der Darstellung (104') des Anhängers (104) angeordnet ist, umfasst.

15. Totwinkelwarn-Softwareprodukt nach Anspruch 14, wobei das Verfahren ferner Folgendes umfasst:
Erkennen des anderen Fahrzeugs in der Totwinkelzone (302A, 302B);
Senden mindestens einer zweiten Anweisung von der Datenverarbeitungshardware (142) an die Benutzerschnittstelle (120), wenn bestimmt wird, dass der Anhänger (104) mit dem Zugfahrzeug (102) verbunden ist, um die Darstellung (102') des Zugfahrzeugs (102), die Darstellung (104') des Anhängers (104) und die Darstellung (OV2) des zweiten anderen Fahrzeugs in dem angezeigten Bild (402) zu ändern, wobei das Senden als Reaktion auf das Erkennen des anderen Fahrzeugs in der Totwinkelzone (302A, 302B) erfolgt.

16. Totwinkelwarn-Softwareprodukt nach Anspruch 15, wobei das Verfahren ferner Folgendes umfasst:
Senden mindestens einer dritten Anweisung von der Datenverarbeitungshardware (142) an die Benutzerschnittstelle (120), wenn bestimmt wird, dass der Anhänger (104) nicht mit dem Zugfahrzeug (102) verbunden ist, um die Darstellung (102') des Zugfahrzeugs (102) und die Darstellung (OV1) des ersten Fahrzeugs in dem angezeigten Bild (402) zu ändern, wobei das Senden als Reaktion auf das Erkennen des anderen Fahrzeugs in der Totwinkelzone erfolgt.

17. Totwinkelwarn-Softwareprodukt nach Anspruch 16, wobei die mindestens eine zweite Anweisung zum Ändern der Darstellung (102') des Zugfahrzeugs (102), der Darstellung (104') des Anhängers (104) und der Darstellung (OV2) des zweiten anderen Fahrzeugs in dem angezeigten Bild (402) dazu dient, die Darstellung (102') des Zugfahrzeugs (102), die Darstellung (104') des Anhängers (104) und die Darstellung (OV2) des zweiten anderen Fahrzeugs von einer ersten Farbe in eine zweite Farbe zu ändern, und
die mindestens eine dritte Anweisung zum Ändern der Darstellung (102') des Zugfahrzeugs (102) und der Darstellung (104') des ersten anderen Fahrzeugs in dem angezeigten Bild (402) dazu dient, die Darstellung (102') des Zugfahrzeugs (102) und die Darstellung (OV1) des ersten anderen Fahrzeugs von der ersten Farbe in die zweite Farbe zu ändern.

18. Totwinkelwarn-Softwareprodukt nach Anspruch 11, wobei das Verfahren ferner Empfangen von Daten umfasst, die einer oder mehreren Abmessungen des Anhängers (104) zugeordnet sind, wobei das Bestimmen der Größe der Totwinkelzone (302A, 302B) mindestens teilweise auf Grundlage der empfangenen Daten erfolgt und die Daten, die der einen oder den mehreren Abmessungen des Anhängers (104) zugeordnet sind, von einem Speicher bereitgestellt werden, auf den durch die Datenverarbeitungshardware (142)oder über eine Benutzerschnittstelle (120) des Zugfahrzeugs (102) zugegriffen werden kann.

19. Totwinkelwarnsystem für ein Zugfahrzeug (102), umfassend:
eine Steuereinheit, umfassend Datenverarbeitungshardware (142) und einen Speicher, wobei die Steuereinheit zu Folgendem konfiguriert ist:
Bestimmen, ob ein Anhänger (104) mit dem Zugfahrzeug (102) verbunden ist;
Bestimmen, ob eine Totwinkelzone (302A, 302B) dem Zugfahrzeug (102) oder dem Zugfahrzeug (102) und dem Anhänger (104) entspricht, auf Grundlage des Bestimmens, ob der Anhänger (104) mit dem Zugfahrzeug (102) verbunden ist; und
Senden mindestens einer Anweisung zum Anzeigen eines Bildes (402) zum Betrachten durch einen Fahrer des Zugfahrzeugs (102) an eine Benutzerschnittstelle des Zugfahrzeugs (102), wobei das angezeigte Bild (402) das Bestimmen angibt, ob die Totwinkelzone dem Zugfahrzeug (102) oder dem Zugfahrzeug (102) und dem Anhänger (104) entspricht, und ein Vorhandensein oder Nichtvorhandensein eines anderen Fahrzeugs (OV) angibt, das in der Totwinkelzone (302A, 302B) angeordnet ist.

20. Totwinkelwarnsystem nach Anspruch 19, wobei
das Bild (402) eine Darstellung (102') des Zugfahrzeugs (102), eine Darstellung (104') des Anhängers (104) und mindestens eine von einer Darstellung (OV1) eines ersten anderen Fahrzeugs, das benachbart zu der Darstellung (102') des Zugfahrzeugs (102) angeordnet ist, oder einer Darstellung (OV2) eines zweiten anderen Fahrzeugs, das benachbart zu der Darstellung (104') des Anhängers (104) angeordnet ist, umfasst, und
die Steuereinheit ferner zu Folgendem konfiguriert ist:
Erkennen des anderen Fahrzeugs (OV) in der Totwinkelzone (302A, 302B);
Senden mindestens einer zweiten Anweisung von der Datenverarbeitungshardware (142) an die Benutzerschnittstelle (120), wenn bestimmt wird, dass der Anhänger (104) mit dem Zugfahrzeug (102) verbunden ist, um die Darstellung (102') des Zugfahrzeugs (102), die Darstellung (104') des Anhängers (104) und die Darstellung (OV2) des zweiten anderen Fahrzeugs in dem angezeigten Bild (402) zu ändern, wobei das Senden als Reaktion auf das Erkennen des anderen Fahrzeugs (OV) in der Totwinkelzone (302A, 302B) erfolgt; und
Senden mindestens einer dritten Anweisung von der Datenverarbeitungshardware (142) an die Benutzerschnittstelle (120), wenn bestimmt wird, dass der Anhänger (104) nicht mit dem Zugfahrzeug (102) verbunden ist, um die Darstellung (102') des Zugfahrzeugs (102) und die Darstellung (OV1) des ersten Fahrzeugs in dem angezeigten Bild (402) zu ändern, wobei das Senden als Reaktion auf das Erkennen des anderen Fahrzeugs (OV) in der Totwinkelzone (302A, 302) erfolgt.

## Revendications

1. Procédé d'avertissement d'angle mort pour un véhicule tracteur (102), le procédé comprenant :
le fait de déterminer, au niveau d'un matériel de traitement de données (142), si une remorque (104) est reliée au véhicule tracteur (102) ;
le fait de déterminer, au niveau du matériel de traitement de données, sur la base du fait de déterminer si la remorque (104) est reliée au véhicule tracteur (102), si une zone d'angle mort (302A, 302B) correspond au véhicule tracteur (102) ou au véhicule tracteur (102) et à la remorque (104) ; et
l'envoi, à partir du matériel de traitement de données (142) à une interface utilisateur (120) du véhicule tracteur (102), d'au moins une instruction pour l'affichage d'une image (402) destinée à être visualisée par un conducteur du véhicule tracteur (102), l'image affichée indiquant le fait de déterminer si la zone d'angle mort (302A, 302B) correspond au véhicule tracteur (102) ou au véhicule tracteur (102) et à la remorque (104), et indiquant une présence ou une absence d'un autre véhicule (OV) dans la zone d'angle mort (302A, 302B).

2. Procédé d'avertissement d'angle mort selon la revendication 1, dans lequel l'affichage de l'image (402) comprend l'affichage de l'image (402) sur au moins un rétroviseur du véhicule tracteur (102).

3. Procédé d'avertissement d'angle mort selon la revendication 1, dans lequel l'affichage de l'image (402) comprend l'affichage de l'image (402) sur un affichage du véhicule tracteur (102).

4. Procédé d'avertissement d'angle mort selon la revendication 1, dans lequel l'image (402) comprend une représentation du véhicule tracteur (102), une représentation de la remorque (104) et au moins l'une d'une représentation (OV1) d'un premier autre véhicule disposé adjacent à la représentation (102') du véhicule tracteur (102) ou d'une représentation (OV2) d'un second autre véhicule disposé adjacent à la représentation (104') de la remorque (104).

5. Procédé d'avertissement d'angle mort selon la revendication 4, comprenant également :
la détection de l'autre véhicule (OV) dans la zone d'angle mort (302A, 302B) ;
si la remorque (104) est déterminée comme étant reliée au véhicule tracteur (102), l'envoi d'au moins une deuxième instruction depuis le matériel de traitement de données (142) vers l'interface utilisateur (120) pour modifier dans l'image (402) affichée la représentation (102') du véhicule tracteur (102), la représentation (104') de la remorque (104) et la représentation (OV2) du second autre véhicule, l'envoi étant effectué en réponse à la détection de l'autre véhicule dans la zone d'angle mort (302A, 302B).

6. Procédé d'avertissement d'angle mort selon la revendication 5, comprenant également :
si la remorque (104) est déterminée comme n'étant pas reliée au véhicule tracteur (102), l'envoi d'au moins une troisième instruction depuis le matériel de traitement de données (142) vers l'interface utilisateur (120) pour modifier dans l'image (402) affichée la représentation (102') du véhicule tracteur (102) et la représentation (OV1) du premier autre véhicule, l'envoi étant effectué en réponse à la détection de l'autre véhicule dans la zone d'angle mort (302A, 302B).

7. Procédé d'avertissement d'angle mort selon la revendication 6, dans lequel l'au moins une deuxième instruction pour modifier la représentation (102') du véhicule tracteur (102), la représentation (104') de la remorque (104) et la représentation (OV2) du second autre véhicule dans l'image (402) affichée est destinée à modifier la représentation (102') du véhicule tracteur (102), la représentation (104') de la remorque (104) et la représentation (OV2) du second autre véhicule d'une première couleur à une seconde couleur, et
l'au moins une troisième instruction pour modifier la représentation (102', 104') du véhicule tracteur (102) et de la remorque (104) et la représentation (OV1) du premier autre véhicule dans l'image (402) affichée est destinée à modifier la représentation (102') du véhicule tracteur (102) et la représentation (OV1) du premier autre véhicule de la première couleur à la seconde couleur sans modifier une couleur de la représentation (104') de la remorque (104).

8. Procédé d'avertissement d'angle mort selon la revendication 7, dans lequel la seconde couleur est le rouge.

9. Procédé d'avertissement d'angle mort selon la revendication 5, comprenant également la réception, au niveau du matériel de traitement de données (142), d'informations associées à une ou plusieurs dimensions de la remorque (104), et la détermination, au niveau du matériel de traitement de données (142), d'une longueur de la zone d'angle mort (302A, 302B) sur la base au moins en partie des informations, dans lequel si la remorque (104) est déterminée comme étant reliée au véhicule tracteur (102), la détection de l'autre véhicule dans la zone d'angle mort (302A, 302B) est basée sur la longueur de la zone d'angle mort (302A, 302B).

10. Procédé d'avertissement d'angle mort selon la revendication 1, dans lequel le fait de déterminer si la zone d'angle mort (302A, 302B) correspond au véhicule tracteur (102) ou au véhicule tracteur (102) et à la remorque (104) est constamment fournie dans l'image (402) affichée pendant le fonctionnement du véhicule tracteur (102).

11. Produit logiciel d'avertissement d'angle mort stocké dans une mémoire non transitoire et ayant des instructions qui, lorsqu'elles sont exécutées par un matériel de traitement de données (142), amènent le matériel de traitement de données (142) à réaliser un procédé comprenant :
le fait de déterminer si une remorque (104) est reliée à un véhicule tracteur (102) ;
le fait de déterminer, sur la base du fait de déterminer si la remorque (104) est reliée au véhicule tracteur (102), si une zone d'angle mort (302A, 302B) correspond au véhicule tracteur (102) ou au véhicule tracteur (102) et à la remorque (104) ; et
l'envoi, à une interface utilisateur (120) du véhicule tracteur (102), d'au moins une instruction pour l'affichage d'une image (402) destinée à être visualisée par un conducteur du véhicule tracteur (102), l'image affichée indiquant le fait de déterminer si la zone d'angle mort (302A, 302B) correspond au véhicule tracteur (102) ou au véhicule tracteur (102) et à la remorque (104), et indiquant une présence ou une absence d'un autre véhicule (OV) dans la zone d'angle mort (302A, 302B).

12. Produit logiciel d'avertissement d'angle mort selon la revendication 11, dans lequel l'affichage de l'image (402) comprend l'affichage de l'image (402) sur au moins un rétroviseur du véhicule tracteur (102).

13. Produit logiciel d'avertissement d'angle mort selon la revendication 12, dans lequel l'au moins un rétroviseur comprend un rétroviseur latéral (404) du véhicule tracteur (102).

14. Produit logiciel d'avertissement d'angle mort selon la revendication 11, dans lequel l'image (402) comprend une représentation du véhicule tracteur (102), une représentation de la remorque (104) et au moins l'une d'une représentation (OV1) d'un premier autre véhicule disposé adjacent à la représentation du véhicule tracteur (102) ou d'une représentation (OV2) d'un second autre véhicule disposé adjacent à la représentation (104') de la remorque (104).

15. Produit logiciel d'avertissement d'angle mort selon la revendication 14, dans lequel le procédé comprend également :
la détection de l'autre véhicule dans la zone d'angle mort (302A, 302B) ;
si la remorque (104) est déterminée comme étant reliée au véhicule tracteur (102), l'envoi d'au moins une deuxième instruction depuis le matériel de traitement de données (142) vers l'interface utilisateur (120) pour modifier la représentation (102') du véhicule tracteur (102), la représentation (104') de la remorque (104) et la représentation (OV2) du second autre véhicule dans l'image (402) affichée, l'envoi étant effectué en réponse à la détection de l'autre véhicule dans la zone d'angle mort (302A, 302B).

16. Produit logiciel d'avertissement d'angle mort selon la revendication 15, dans lequel le procédé comprend également :
si la remorque (104) est déterminée comme n'étant pas reliée au véhicule tracteur (102), l'envoi d'au moins une troisième instruction depuis le matériel de traitement de données (142) vers l'interface utilisateur (120) pour modifier la représentation (102') du véhicule tracteur (102) et la représentation (OV1) du premier véhicule dans l'image (402) affichée, l'envoi étant effectué en réponse à la détection de l'autre véhicule dans la zone d'angle mort.

17. Produit logiciel d'avertissement d'angle mort selon la revendication 16, dans lequel
l'au moins une deuxième instruction pour modifier la représentation (102') du véhicule tracteur (102), la représentation (104') de la remorque (104) et la représentation (OV2) du second autre véhicule dans l'image (402) affichée est destinée à modifier la représentation (102') du véhicule tracteur (102), la représentation (104') de la remorque (104) et la représentation (OV2) du second autre véhicule d'une première couleur à une seconde couleur, et
l'au moins une troisième instruction pour modifier la représentation (102') du véhicule tracteur (102) et la représentation (104') du premier autre véhicule dans l'image (402) affichée est destinée à modifier la représentation (102') du véhicule tracteur (102) et la représentation (OV1) du premier autre véhicule de la première couleur à la seconde couleur.

18. Produit logiciel d'avertissement d'angle mort selon la revendication 11, dans lequel le procédé comprend également la réception de données associées à une ou plusieurs dimensions de la remorque (104), la détermination de la taille de la zone d'angle mort (302A. 302B) est basée au moins en partie sur les données reçues, et les données associées aux une ou plusieurs dimensions de la remorque (104) sont fournies à partir d'une mémoire accessible par le matériel de traitement de données (142) ou via une interface utilisateur (120) du véhicule tracteur (102).

19. Système d'avertissement d'angle mort pour un véhicule tracteur (102), comprenant :
un dispositif de commande comprenant un matériel de traitement de données (142) et une mémoire, le dispositif de commande étant configuré pour déterminer si une remorque (104) est reliée au véhicule tracteur (102) ;
déterminer, sur la base du fait de déterminer si la remorque (104) est reliée au véhicule tracteur (102), si une zone d'angle mort (302A, 302B) correspond au véhicule tracteur (102) ou au véhicule tracteur (102) et à la remorque (104) ; et
envoyer, à une interface utilisateur du véhicule tracteur (102), au moins une instruction pour l'affichage d'une image (402) destinée à être visualisée par un conducteur du véhicule tracteur (102), l'image (402) affichée indiquant le fait de déterminer si la zone d'angle mort correspond au véhicule tracteur (102) ou au véhicule tracteur (102) et à la remorque (104), et indiquant une présence ou une absence d'un autre véhicule (OV) disposé dans la zone d'angle mort (302A, 302B).

20. Système d'avertissement d'angle mort selon la revendication 19, dans lequel l'image (402) comprend une représentation (102') du véhicule tracteur (102), une représentation (104') de la remorque (104) et au moins l'une d'une représentation (OV1) d'un premier autre véhicule disposé adjacent à la représentation (102') du véhicule tracteur (102) ou d'une représentation (OV2) d'un second autre véhicule disposé adjacent à la représentation (104') de la remorque (104), et
le dispositif de commande est également configuré pour :
détecter l'autre véhicule (OV) dans la zone d'angle mort (302A, 302B) ;
si la remorque (104) est déterminée comme étant reliée au véhicule tracteur (102), l'envoi d'au moins une deuxième instruction depuis le matériel de traitement de données (142) vers l'interface utilisateur (120) pour modifier la représentation (102') du véhicule tracteur (102), la représentation (104') de la remorque (104) et la représentation (OV2) du second autre véhicule dans l'image (402) affichée, l'envoi étant effectué en réponse à la détection de l'autre véhicule (OV) dans la zone d'angle mort (302A, 302B) ; et
si la remorque (104) est déterminée comme n'étant pas reliée au véhicule tracteur (102), l'envoi d'au moins une troisième instruction depuis le matériel de traitement de données (142) vers l'interface utilisateur (120) pour modifier la représentation (102') du véhicule tracteur (102) et la représentation (OV1) du premier véhicule dans l'image (402) affichée, l'envoi étant effectué en réponse à la détection de l'autre véhicule (OV) dans la zone d'angle mort (302A, 302).
